# EUROPÄISCHE PATENTSCHRIFT

(11) **EP 3 189 515 B1**
(45) Veröffentlichungstag und Bekanntmachung des Hinweises auf die Patenterteilung: **19.03.2025**
(21) Anmeldenummer: 15757167.0
(22) Anmeldetag: 13.08.2015
(51) Int. Cl.: G09F 9/30, G09F 9/33, G09F 3/00, G09F 3/20

(54) **LEUCHTMITTELANORDNUNG ZUR DYNAMISCHEN ANZEIGE EINES MASCHINENLESBAREN CODES**
LUMINOUS ELEMENT ARRANGEMENT FOR THE DYNAMIC DISPLAY OF A MACHINE-READABLE CODE
ENSEMBLE DE MOYENS LUMINESCENTS POUR L'AFFICHAGE DYNAMIQUE D'UN CODE LISIBLE PAR MACHINE

(30) Priorität: 04.09.2014 DE 102014217692
(43) Veröffentlichungstag der Anmeldung: 12.07.2017
(73) Patentinhaber: Tridonic GmbH & Co. KG, 6851 Dornbirn (AT)
(72) Erfinder: HERTER, Jens, 88131 Lindau (DE)
(74) Vertreter: Rupp, Christian
(86) Internationale Anmeldenummer: PCT/EP2015/068652
(87) Internationale Veröffentlichungsnummer: WO 2016/034385

(56) Entgegenhaltungen:
- DE-A1- 102010 050 192
- JP-A- H0 695 599
- US-A1- 2013 071 029
- US-A1- 2013 228 624

## Beschreibung

Die Erfindung betrifft ein Beleuchtungssystem mit wenigstens einer Leuchtmittelanordnung zur dynamischen Anzeige eines maschinenlesbaren Codes und insbesondere ein Leuchtmittelfeld das mehrere Leuchtmittel, z.B. LEDs, zur Anzeige eines solchen maschinenlesbaren Codes aufweist. Die Leuchtmittelanordnung stellt vorzugsweise Parameter (Betriebs- und/oder Konfigurationsparameter) des Systems in Form eines maschinenlesbaren Codes visuell dar. Bei der Leuchtmittelanordnung handelt es sich dabei um einen Teilnehmer des Beleuchtungssystems.

Maschinenlesbare Codes sind bekannt. Die bekanntesten Vertreter sind dabei Strichcodes (oder Balkencodes, Streifencodes, Barcodes) wie sie auf vielen Produkten eingesetzt werden. Bekannte Formate für solche Strichcodes sind EAN, UPC, IAN, JAN sowie Codes aus der 2/5-Familie sowie Codes gemäß Code39, Code93, Codabar, Code128, usw.

Bekannt sind außerdem "zwei dimensionale" (2D) Strichcodes, die beispielsweise dem Codablock-Format, dem Code49, dem PDF417 oder anderen Formaten entsprechen, bei denen codierte Daten entlang zweier Dimensionen aufgelöst werden. Bekannte zwei dimensionale Codes sind Matrix-Codes, wie z.B. DataMatrix Codes, MaxiCodes oder der Aztec-Code. Seit ca. 1994 ist vor allem auch der QR-Code ein bekannter Vertreter der 2D Codes, da er eine große Anzahl von Informationen codieren kann und zudem eine Fehlerkorrektur aufweist. Vorteilhaft ist zudem, dass QR-Codes lizenzkostenfrei verwendet werden können.

US 2013/228624 A1 offenbart ein Verfahren zum Übertragen oder Empfangen von Daten unter Verwendung eines Multi-Frame-Barcodes. Dabei wird eine Abfolge von Barcodes in einer Anzeigevorrichtung so dargestellt, dass jeweils nur ein Barcode aus der Vielzahl der Barcodes angezeigt wird, um bei Verwendung eines Barcodes einen dreidimensionalen (zwei räumliche, ein zeitlicher) Barcode zu bilden.

JP H06-95599 A und US 2013/071029 A1 offenbaren jeweils eine Leuchtmittelanordnung zur Darstellung mehrdimensionaler Barcodes.

Insbesondere in Beleuchtungs- und Gebäudetechniksystemen besteht oftmals das Bedürfnis, Parameter des Systems oder eines Teilnehmers auszulesen und/oder zu verändern. Das erfindungsgemäße Beleuchtungssystem bieten eine Lösung für dieses Bedürfnis. Die Erfindung stellt daher ein Beleuchtungssystem gemäß dem unabhängigen Anspruch 1 bereit. Weiterentwicklungen sind Gegenstand der abhängigen Ansprüche.

Gemäß einem Aspekt wird ein Beleuchtungssystem aufweisend mehrere Systemteilnehmer bereitgestellt. Die Systemteilnehmer weisen wenigstens eine Leuchte auf. Die Leuchte weist eine Leuchtmittelanordnung, insbesondere ein Leuchtmittelfeld, mehrere Leuchtmittel, wenigstens eine Kommunikationsschnittstelle, insbesondere eine Bus- und/oder Funkschnittstelle, und eine Konvertereinheit auf, wobei die Konvertereinheit die mehreren Leuchtmittel der Leuchtmittelanordnung abhängig von einem über die Kommunikationsschnittstelle empfangenen Signal aktiviert und/oder deaktiviert, so dass bei Aufsicht auf die Leuchtmittelanordnung ein maschinenlesbarer Code, insbesondere ein ein- oder zweidimensionaler, maschinenlesbarer Code dargestellt ist.

Das Beleuchtungssystem umfasst ferner eine zentrale Steuereinheit aufweisend eine weitere Kommunikationsschnittstelle, wobei die Konvertereinheit der wenigstens einen Leuchte von der zentralen Steuereinheit adressierbar ist, und ein mobiles Kommunikationsgerät, welches dazu eingerichtet ist, den von der Leuchtmittelanordnung dargestellten maschinenlesbaren Code zu erfassen, daraus Betriebs- und/oder Konfigurationsparameter zu extrahieren und diese über eine Benutzerschnittstelle des mobilen Kommunikationsgeräts zu verändern, und die veränderten Betriebs- und/oder Konfigurationsparameter über eine Schnittstelle des mobilen Kommunikationsgeräts an die weitere Kommunikationsschnittstelle zu senden. Die zentrale Steuereinheit ist dazu eingerichtet, die über die weitere Schnittstelle empfangenen veränderten Betriebs- und/oder Konfigurationsparameter zu verwenden, um Betriebs- und/oder Konfigurationsparameter in den mit dem System verbundenen mehreren Systemteilnehmern einzustellen.

Der maschinenlesbare Code kann ein QR-Code sein.

Der maschinenlesbare Code kann wenigstens einen Parameter kodieren, der mit dem Signal von der Leuchtmittelanordnung empfangen wird. Vorzugsweise ist also in der Konvertereinheit eine Steuereinheit vorgesehen, die das bspw. über einen Bus empfangene Signal in eine Code-Darstellung umsetzt und die entsprechende Ansteuerung der Leuchtmittel veranlasst. Vorzugsweise weist somit das extern empfangene Signal nicht unmittelbar die zur Darstellung des Codes notwendige Ansteuerung der Leuchtmittel an, auch wenn es grundsätzlich gemäss der Erfindung auch möglich ist, dass das Signal direkt diese Code-Darstellung anweist.

Die Leuchtmittelanordnung kann über die Kommunikationsschnittstelle funktional mit dem Beleuchtungssystem verbindbar sein. Der maschinenlesbare Code kann Betriebs- und/oder Konfigurationsparameter des entsprechenden Systems und/oder von Systemteilnehmern des jeweiligen Systems codieren.

Die Betriebs- und/oder Konfigurationsparameter können Parameter eines Leuchtmittelbetriebsgeräts sein.

Das System kann die über die weitere Kommunikationsschnittstelle empfangenen Betriebsparameter und/oder Konfigurationsparameter auswerten und diese an Systemteilnehmer ausgeben.

Wenigstens ein Systemteilnehmer kann Betriebs- und/oder Konfigurationsparameter an die Leuchtmittelanordnung senden. Die Leuchtmittelanordnung kann in Antwort darauf die Darstellung des maschinenlesbaren Codes einstellen oder ändern.

Das mobile Kommunikationsgerät kann wenigstens ein Mittel zum Erfassen des maschinenlesbaren Codes, insbesondere eine Kamera und eine Schnittstelle zur Kommunikation, insbesondere eine WLAN/WiFi-, eine Bluetooth-, eine USB-, und/oder eine mobile Datenkommunikations-Schnittstelle zur Kommunikation mit der weiteren Kommunikationsschnittstelle aufweisen.

Die zentrale Steuereinheit kann die über die weitere Kommunikationsschnittstelle empfangenen Betriebs- und/oder Konfigurationsparameter auswerten und entsprechende Betriebs-und/oder Konfigurationsparameter an Teilnehmer des Systems senden.

Die Betriebs- und/oder Konfigurationsparameter können wenigstens einen Identifikator umfassen, der einen Teilnehmer des Systems identifiziert, dessen Betriebs- und/oder Konfigurationsparameter vorzugsweise gesetzt werden sollen.

Das mobile Endgerät kann eine Softwarekomponente umfassen, die eine Dekodierung des maschinenlesbaren Codes erlaubt.

Die Erfindung wird nunmehr auch mit Bezug auf die Figur beschrieben:

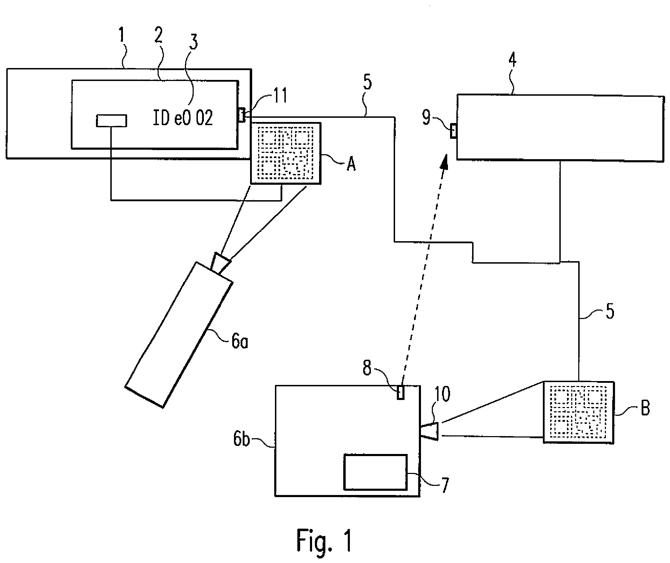

- Fig. 1: zeigt eine schematische und exemplarische Darstellung eines erfindungsgemäßen Systems.

Die erfindungsgemäße Leuchtmittelanordnung, die insbesondere in Form eines Anzeigegeräts oder einer Anzeigeeinheit bereitgestellt sein kann, weist erfindungsgemäß eine Kommunikationsschnittstelle auf, über die der Leuchtmittelanordnung Informationen zugeführt werden können. Diese Informationen enthalten insbesondere Daten, die codiert in Form eines Strichcodes (1D- oder 2D-Strichcode) durch die Leuchtmittelanordnung dargestellt werden sollen.

Wird das Anzeigegerät mit einem Beleuchtungssystem verbunden, so können insbesondere Daten an das Anzeigegerät übermittelt werden, die Betriebs- oder Konfigurationsparameter des jeweiligen Systems bzw. seiner Teilnehmer enthalten. Diese werden dann durch die Leuchtmittelanordnung codiert dargestellt.

Die Kommunikationsschnittstelle des Anzeigegeräts kann dabei insbesondere eine Busschnittstelle sein, mit der die Leuchtmittelanordnung an einen Gebäudetechniksystembus oder Beleuchtungssystembus angeschlossen werden kann (bspw. DALI- oder DSI-Bus).

Die Leuchtmittelanordnung erfasst also wenigstens ein Signal und stellt davon abhängig einen entsprechenden maschinenlesbaren Code durch Leuchtmittel der Leuchtmittelanordnung dar. Die Leuchtmittelanordnung weist dafür eine Konvertereinheit auf, die funktional mit der Schnittstelle der Leuchtmittelanordnung und den Leuchtmitteln verbunden ist. Die Konvertereinheit wandelt dann das über die Schnittstelle empfangene Signal, und steuert die Leuchtmittel der Leuchtmittelanordnung entsprechend an.

Alternativ kann die Konvertereinheit die gewünschten Informationen auch in für eine Ansteuerschaltung passende Ansteuerdaten umsetzen. Die Konvertereinheit kann weiter konfigurierbar sein und bspw. eine Auswahl von dazustellenden Parametern selektiv auswählen. Der erzeugte maschinenlesbare Code kann nun von einem Gerät, insbesondere einem mobilen Kommunikationsgerät ausgelesen werden.

Einerseits wird der von dem Anzeigegerät dargestellten maschinenlesbaren Code beispielsweise mit einem speziell dafür entwickelten Strichcode-Lesegerät abgetastet, das dann insbesondere den maschinenlesbaren Code decodiert. Das entsprechende Gerät kann dann die durch den maschinenlesbaren Code codierten Parameter so verfügbar machen, dass sie beispielsweise durch einen Benutzer über eine Benutzerschnittstelle verändert werden können.

Die veränderten Parameter werden dann mittels einer weiteren Kommunikationsschnittstelle an das System übermittelt, um so dem System geänderte Konfigurations- oder Betriebsparameter einzuspeisen. Ein durch die Leuchtmittelanordnung dargestellter Parameter, ist insbesondere ein Identifikator, der einen Teilnehmer des Systems mit den dargestellten Daten identifiziert. Dieser Identifikator kann dann auch mit den an das System gesendeten Daten von dem Kommunikationsgerät gesendet werden. So kann eine Änderung der Parameter des zu dem Identifikator gehörenden Teilnehmers erfolgen.

Eine zentrale Steuereinheit des Systems erfasst diese geänderten Parameter dann und führt entsprechende Einstellungen durch, um Teilnehmer des Systems entsprechend zu konfigurieren. In Antwort auf die Änderung kann dann auch die Darstellung des maschinenlesbaren Codes durch Übertragung geänderter Betriebs- und/oder Konfigurationsparameter zu der Leuchtmittelanordnung passend geändert werden. Die Konvertereinheit weist eine Systemadresse auf und ist so, insbesondere von der zentralen Steuereinheit adressierbar.

Selbstverständlich ist es jedoch auch möglich, den entsprechenden maschinenlesbaren Code durch ein anderes mobiles Kommunikationsgerät, bspw. ein Smartphone, ein Tablet, ..., zu erfassen. Dazu ist auf dem mobilen Kommunikationsgerät eine Softwarekomponente vorgesehen, die es erlaubt, beispielsweise über die Kamera des mobilen Kommunikationsgeräts, den maschinenlesbaren Code zu erfassen, entsprechend auszuwerten und die codierten Parameter in dem mobilen Kommunikationsgerät verfügbar zu machen. Die Softwarekomponente kann dann eine Benutzerschnittstelle darstellen, über die, mittels einer Eingabeschnittstelle des mobilen Kommunikationsgeräts, die entsprechenden Parameter in dem Kommunikationsgerät verändert werden können. Die Eingabeschnittstelle kann dabei insbesondere ein berührungsempfindlicher Bildschirm (Touchscreen) sein. Es ist das aber auch möglich, die Parameter mittels anderer für die Benutzereingabe geeigneter Mittel (bspw. Tastatur oder Maus) zu verändern.

Die meisten mobilen Kommunikationsendgeräte weisen weiter wenigstens eine weitere Kommunikationsschnittstelle (bspw. zur Schnittstelle für drahtlose Netzwerke wie WLAN, Bluetooth, Zig Bee, ...) auf. Über diese weitere Kommunikationsschnittstelle werden dann die geänderten Parameter an das System übermittelt, das eine entsprechend passend ausgestaltete Schnittstelle (WLAN, Bluetooth, Zig Bee) aufweist.

Ein weiterer Anwendungsfall für die dynamische Leuchtmittelanordnung kann im Bereich der Notlichtgeräte ermittelt werden.

So kann ein Notlichtgerät mit einer entsprechenden Leuchtmittelanordnung ausgestaltet werden und so Informationen über seinen Zustand (bspw. Batterie- oder Akkumulatorkapazität aber auch bspw. einen Leuchtmittelzustand) anzeigen. Beispielsweise kann das Ergebnis eines Selbsttests des Notlichtgeräts durch die dynamische Anzeige codiert dargestellt werden.

Dabei ist es möglich, dass die Leuchtmittelanordnung lediglich selektiv aktivierbar ist. Beispielsweise kann an einem Notlichtgerät ein Taster/Schalter vorgesehen sein, mit dem die dynamische Leuchtmittelanordnung temporär aktiviert werden kann. Auch ist es möglich, dass die Leuchtmittelanordnung an einem Notlichtgerät oder einem Gebäude-/Beleuchtungssystem bzw. -teilnehmer nur während einer Installations-/Konfigurationsphase betrieben wird, um entsprechende Parameter auslesen und einstellen zu können (z.B. eine Teilnehmeradresse). Anschließend kann die Leuchtmittelanordnung über insbesondere den Bus deaktiviert werden, oder von dem Bus getrennt werden, wenn sie als separate Anzeigeeinheit ausgebildet ist. Der maschinenlesbare Code, insbesondere der QR-Code wird jeweils vorzugsweise durch eine LED-Matrix oder durch einzelne LEDs in im Wesentlichen matrixförmiger Anordnung dargestellt.

Insbesondere weist das System eine zentrale Steuereinheit auf, die dazu in der Lage ist, Befehle an die Leuchtmittelanordnung zu senden. Durch die Leuchtmittelanordnung können dann beispielsweise auch Zustandsdaten von Leuchten, Sensoren oder Schaltern dargestellt werden. Eine Möglichkeit zur Anbringung der Leuchtmittelanordnung besteht beispielsweise darin, die Anzeige in oder nahe an einem Schalter/einer Leuchte anzubringen.

Fig. 1 zeigt exemplarisch eine Ausgestaltung eines Ausführungsbeispiels. Hier ist in einem Raum wenigstens eine Leuchtmittelanordnung A in Form einer dynamischen Anzeigeeinheit bzw. eines Anzeigegeräts vorgesehen. Dabei weist eine Leuchte 1 die Leuchtmittelanordnung A auf, wobei die Leuchtmittelanordnung A einen Zustand der Leuchte bzw. deren Konfigurations- oder Betriebsparameter anzeigen kann. Die Leuchte 1 ist ein Systemteilnehmer eines Beleuchtungssystems.

Die Leuchte weist insbesondere eine Konvertereinheit 2 auf, die mit einer Adresse ausgestattet ist. Es ist nun möglich, dass eine Steuerschaltung der Leuchte Konfigurations- oder Betriebsparameter der Leuchte erfasst und an die Konvertereinheit 2 sendet. Diese kann über eine Adresse 3, im Beispiel die ID e0 02, von vorzugsweise einer zentralen Steuereinheit 4 über einen Bus 5 adressiert werden.

Die Konvertereinheit 2 wandelt dann die von der Steuereinheit 4 empfangenen Daten zur Darstellung durch die Leuchtmittelanordnung A, so, dass die Leuchtmittelanordnung A an der Leuchte 1 dann einen entsprechenden maschinenlesbaren Code darstellt.

Selbstverständlich ist es auch möglich, mehr als eine Anzeigeeinheit vorzusehen. So kann beispielsweise eine weitere Leuchtmittelanordnung B vorgesehen sein, die zum Beispiel an einer anderen Stelle in einem Raum positioniert ist, die möglicherweise leichter zugänglich.

Auch die Leuchtmittelanordnung B weist einen entsprechenden Generator (nicht gezeigt) zur Erzeugung eines maschinenlesbaren Codes auf. Die Konvertereinheit weist ebenfalls eine Betriebsadresse zur Adressierung auf und kann von der Steuereinheit 4, insbesondere einer zentralen Steuereinheit adressiert werden. Die zentrale Steuereinheit 4 kann somit entsprechende Informationen bzw. Signale an die weitere Leuchtmittelanordnung B übermitteln, wodurch ein entsprechender maschinenlesbarer Code durch den Codegenerator erzeugt werden kann, und durch die Leuchtmittelanordnung angezeigt wird.

Beispielsweise ist es möglich, dass die Leuchte 1 Konfigurations- und/oder Betriebsparameter an die zentrale Steuereinheit 4 übermittelt und die zentrale Steuereinheit 4 in Antwort darauf mittels der Betriebsadresse 3 des Codegenerators der Leuchtmittelanordnung B die Leuchtmittelanordnung B adressiert, und somit eine entsprechende codierte Darstellung der Konfigurations- und/oder Betriebsparameter der Leuchte 1 durch die Anzeigeeinheit B hervorruft.

Im Beispiel sind weiter mobile Kommunikationsgeräte 6a, 6b gezeigt, die dazu in der Lage sind, den von der jeweiligen Leuchtmittelanordnung A, B dargestellten maschinenlesbaren Code zu erfassen, zu decodieren, und die entsprechenden dargestellten Parameter in dem Gerät 6a, 6b verfügbar zu machen.

Das mobile Kommunikationsgerät 6b ist dabei mit einer Benutzerschnittstelle 7 ausgestattet, über die die Parameter verändert werden können. Zudem weist das mobile Kommunikationsgerät 6b eine Schnittstelle 8 auf, die eine Kommunikation mit der zentralen Steuereinheit 4 ermöglicht. Dies kann insbesondere mittels drahtloser Kommunikation erfolgen, wie dies durch den gestrichpunkteten Pfeil angedeutet ist. Die Steuerreinheit 4 weist dann eine passende Kommunikationsschnittstelle 9 auf. Die mobilen Kommunikationsendgeräte 6a, 6b können dabei insbesondere jeweils mit einer Kamera 10 ausgestattet sein, die dazu dient, den maschinenlesbaren Code zu erfassen.

Insbesondere durch die Anbringen der Leuchtmittelanordnung an Gebäudetechnikgeräten oder Geräteteilnehmern eines Beleuchtungssystems ist es möglich, einen Identifikator des jeweiligen Systemteilnehmers darzustellen. Somit kann insbesondere bei der Installation/Kommissionierung der Teilnehmer eine einfache Lokalisierung der Teilnehmer bzw. eine Positionsbestimmung erfolgen.

Hierzu kann die mittels der Leuchtmittelanordnung codiert dargestellte Identifikatorinformation ausgelesen und, beispielsweise auf einem mobilen Kommunikationsgerät 6b, mit einer Position verknüpft werden. Diese Position kann insbesondere mittels einer in dem mobilen Kommunikationsgerät 6b vorhandenen Positionierungseinheit (nicht gezeigt) erfolgen (bspw. einem GPS oder GLONASS-Empfänger) der entweder automatisch oder auf eine Benutzereingabe hin eine Position bestimmt.

Die jeweilige Konvertereinheit muss nicht über einen Bus mit der Steuereinheit verbunden sein, vielmehr kann eine Schnittstelle 11 auch als Funk-, USB-, serielle Schnittstelle oder Schnittstelle anderer Art ausgebildet sein. Diese Schnittstelle kann auch die Schnittstelle der Leuchtmittelanordnung sein.

## Patentansprüche

1. Beleuchtungssystem, aufweisend:
- mehrere Systemteilnehmer aufweisend wenigstens eine Leuchte (1), die wenigstens eine Leuchte aufweisend:
o eine Leuchtmittelanordnung (A) aufweisend mehrere Leuchtmittel,
o wenigstens eine Kommunikationsschnittstelle (11), und
o eine Konvertereinheit (2),
wobei die Konvertereinheit (2) dazu eingerichtet ist, die mehreren Leuchtmittel der Leuchtmittelanordnung (A) abhängig von einem über die Kommunikationsschnittstelle (11) empfangenen Signal zu aktivieren und/oder zu deaktivieren, so dass bei Aufsicht auf die Leuchtmittelanordnung (A) ein maschinenlesbarer Code dargestellt ist,
**dadurch gekennzeichnet, dass** das Beleuchtungssystem ferner umfasst:
- eine zentrale Steuereinheit (4) aufweisend eine weitere Kommunikationsschnittstelle (9), wobei die Konvertereinheit (2) der wenigstens einen Leuchte (1) von der zentralen Steuereinheit (4) adressierbar ist, und
- ein mobiles Kommunikationsgerät (6b), welches dazu eingerichtet ist, den von der Leuchtmittelanordnung (A) dargestellten maschinenlesbaren Code zu erfassen, daraus Betriebs- und/oder Konfigurationsparameter zu extrahieren und diese über eine Benutzerschnittstelle (7) des mobilen Kommunikationsgeräts (6b) zu verändern, und die veränderten Betriebs- und/oder Konfigurationsparameter über eine Schnittstelle (8) des mobilen Kommunikationsgeräts (6b) an die weitere Kommunikationsschnittstelle (9) zu senden,
wobei die zentrale Steuereinheit (4) dazu eingerichtet ist, die über die weitere Schnittstelle (9) empfangenen veränderten Betriebs- und/oder Konfigurationsparameter zu verwenden, um Betriebs- und/oder Konfigurationsparameter in den mit dem System verbundenen mehreren Systemteilnehmern einzustellen.

2. Beleuchtungssystem nach Anspruch 1, wobei der maschinenlesbare Code ein QR-Code ist.

3. Beleuchtungssystem nach Anspruch 1 oder 2, wobei der maschinenlesbare Code wenigstens einen Parameter kodiert, der mit dem Signal von der Leuchtmittelanordnung (A) empfangen wird.

4. Beleuchtungssystem nach einem der vorgehenden Ansprüche, wobei wenigstens einer der mehreren Systemteilnehmer dazu eingerichtet ist, weitere Betriebs- und/oder Konfigurationsparameter an die Leuchte (1) zu senden, und wobei die Leuchte (1) dazu eingerichtet ist, in Antwort darauf die Darstellung des maschinenlesbaren Codes einzustellen oder zu ändern.

5. Beleuchtungssystem nach einem der vorgehenden Ansprüche, wobei das mobile Kommunikationsgerät (6b) wenigstens ein Mittel zum Erfassen des maschinenlesbaren Codes aufweist und wobei die Schnittstelle (8) zur Kommunikation mit der weiteren Kommunikationsschnittstelle (9) eine WLAN/WiFi-, eine Bluetooth-, eine USB-, und/oder eine mobile Datenkommunikations-Schnittstelle ist.

6. Beleuchtungssystem nach einem der vorgehenden Ansprüche, wobei die zentrale Steuereinheit (4) dazu eingerichtet ist, die über die weitere Kommunikationsschnittstelle (9) empfangenen veränderten Betriebs- und/oder Konfigurationsparameter auszuwerten und entsprechende Betriebs-und/oder Konfigurationsparameter an die Systemteilnehmer zu senden.

## Claims

1. Lighting system, comprising:
- a plurality of system participants having at least one luminaire (1), the at least one luminaire comprising:
∘ a lamp arrangement (A) having a plurality of lamps,
∘ at least one communication interface (11), and
∘ a converter unit (2),
the converter unit (2) being designed to activate and/or deactivate the plurality of lamps of the lamp arrangement (A) depending on a signal received via the communication interface (11), so that a machine-readable code is displayed when the lamp arrangement (A) is viewed from above,
**characterized in that** the lighting system further comprises:
- a central control unit (4) having a further communication interface (9), the converter unit (2) of the at least one luminaire (1) being able to be addressed by the central control unit (4), and
- a mobile communication device (6b) which is designed to capture the machine-readable code displayed by the lamp arrangement (A), to extract operating and/or configuration parameters therefrom and to change these via a user interface (7) of the mobile communication device (6b), and to send the changed operating and/or configuration parameters to the further communication interface (9) via an interface (8) of the mobile communication device (6b), the central control unit (4) being designed to use the changed operating and/or configuration parameters received via the further interface (9) in order to set operating and/or configuration parameters in the plurality of system participants connected to the system.

2. Lighting system according to claim 1, wherein the machine-readable code is a QR code.

3. Lighting system according to either claim 1 or claim 2, wherein the machine-readable code encodes at least one parameter received with the signal from the lamp arrangement (A).

4. Lighting system according to any of the preceding claims, wherein at least one of the plurality of system participants is designed to send further operating and/or configuration parameters to the luminaire (1), and wherein the luminaire (1) is designed to adjust or change the display of the machine-readable code in response thereto.

5. Lighting system according to any of the preceding claims, wherein the mobile communication device (6b) comprises at least one means for detecting the machine-readable code and wherein the interface (8) for communication with the further communication interface (9) is a WLAN/WiFi, Bluetooth, USB, and/or mobile data communication interface.

6. Lighting system according to any of the preceding claims, wherein the central control unit (4) is designed to evaluate the changed operating and/or configuration parameters received via the further communication interface (9) and to send corresponding operating and/or configuration parameters to the system participants.

## Revendications

1. Système d'éclairage, présentant :
- plusieurs éléments participants de système présentant au moins un luminaire (1), l'au moins un luminaire présentant :
∘ un agencement de moyens lumineux (A) présentant plusieurs moyens lumineux,
∘ au moins une interface de communication (11), et
∘ une unité formant convertisseur (2),
dans lequel l'unité formant convertisseur (2) est configurée pour activer et/ou désactiver les moyens lumineux de l'agencement de moyens lumineux (A) en fonction d'un signal reçu par l'intermédiaire de l'interface de communication (11), de sorte qu'un code lisible par machine est représenté lors de la surveillance de l'agencement de moyens lumineux (A),
**caractérisé en ce que** le système d'éclairage comprend en outre :
- une unité de commande centrale (4) présentant une autre interface de communication (9), dans lequel l'unité formant convertisseur (2) de l'au moins un luminaire (1) est adressable par l'unité de commande centrale (4), et
- un appareil de communication mobile (6b) qui est configuré pour saisir le code lisible par machine représenté par l'agencement de moyens lumineux (A), pour en extraire des paramètres de fonctionnement et/ou de configuration et pour les modifier par l'intermédiaire d'une interface utilisateur (7) de l'appareil de communication mobile (6b), et pour envoyer les paramètres de fonctionnement et/ou de configuration modifiés à l'autre interface de communication (9) par l'intermédiaire d'une interface (8) de l'appareil de communication mobile (6b), dans lequel l'unité de commande centrale (4) est configurée pour utiliser les paramètres de fonctionnement et/ou de configuration modifiés reçus par l'intermédiaire de l'autre interface (9) afin de régler des paramètres de fonctionnement et/ou de configuration dans les éléments participants de système connectés au système.

2. Système d'éclairage selon la revendication 1, dans lequel le code lisible par machine est un code QR.

3. Système d'éclairage selon la revendication 1 ou 2, dans lequel le code lisible par machine code au moins un paramètre reçu avec le signal en provenance de l'agencement de moyens lumineux (A).

4. Système d'éclairage selon l'une des revendications précédentes, dans lequel au moins l'un parmi les éléments participants de système est configuré pour envoyer d'autres paramètres de fonctionnement et/ou de configuration au luminaire (1), et dans lequel le luminaire (1) est configuré pour régler ou modifier la représentation du code lisible par machine en réponse à ceux-ci.

5. Système d'éclairage selon l'une des revendications précédentes, dans lequel l'appareil de communication mobile (6b) présente au moins un moyen permettant de saisir le code lisible par machine et dans lequel l'interface (8) pour la communication avec l'autre interface de communication (9) est une interface WLAN/WiFi, une interface Bluetooth, une interface USB et/ou une interface de communication de données mobile.

6. Système d'éclairage selon l'une des revendications précédentes, dans lequel l'unité de commande centrale (4) est configurée pour évaluer les paramètres de fonctionnement et/ou de configuration modifiés reçus par l'intermédiaire de l'autre interface de communication (9) et pour envoyer des paramètres de fonctionnement et/ou de configuration correspondants aux éléments participants de système.
